# EUROPÄISCHE PATENTANMELDUNG

(11) **EP 1 039 150 A2**
(43) Veröffentlichungstag der Anmeldung: **27.09.2000**
(21) Anmeldenummer: 00810223.8
(22) Anmeldetag: 16.03.2000
(51) Int. Cl.: F16B 13/08

(54) **Spreizanker**

(30) Priorität: 23.03.1999 DE 19913229
(71) Anmelder: HILTI Aktiengesellschaft, 9494 Schaan (LI)
(72) Erfinder: Kaibach, Werner, 86807 Buchloe (DE); Raber, Stefan, 86916 Kaufering (DE); Negele, Hans-Jürgen, 86920 Denklingen (DE)
(74) Vertreter: Wildi, Roland

(57) **Zusammenfassung**

Ein Spreizanker besitzt eine Ankerstange mit einem Kopfteil, dass sich zum freien Ende der Ankerstange erweitert, und eine Spreizhülse (1) mit einem Spreizlappen aufweisenden Spreizbereich. Die Spreizhülse (1) ist unter radialem Ausstellen der Spreizlappen auf das Kopfteil auftreibbar. An ihrem rückwärtigen Hülsenrand (2) weist die Spreizhülse (1) zwei axiale Nuten (7, 9) auf, die einander diametral gegenüberliegen. Wenigstens eine der Seitenwände (3, 5) jeder Nut (7, 9) ist mit einer Ausnehmung (8, 10) versehen. Die Ausnehmungen (8, 10) in den Nuten (7, 9) sind dabei an entgegengesetzten Seitenwänden (3, 5) vorgesehen.

## Beschreibung

Die Erfindung betrifft einen Spreizanker gemäss dem Oberbegriff des Patentanspruchs 1.

Spreizanker der gattungemässen Art umfassen eine Ankerstange mit einem Kopfteil, das sich zum freien Ende der Ankerstange erweitert, und eine Spreizhülse mit einem Spreizlappen aufweisenden Spreizbereich. Die Spreizhülse ist entlang der Ankerstange axial verschiebbar. Durch Auftreiben der Spreizhülse auf das sich konisch erweiternde Kopfteil sind die Spreizlappen radial ausstellbar. Ein derartiger Spreizanker ist beispielsweise aus der US-A-4,702,654 (entspricht EP-B-0 217 053) bekannt. Insbesondere handelt es sich bei diesem Spreizanker um ein Hinterschnittsystem, welches sich bei der Verankerung selbsttätig eine Hinterschneidung in einem Bohrloch erzeugt und durch Formschluss verankert. Zu diesem Zweck ist die Spreizhülse an den Spreizlappen mit Schneiden versehen. Die Spreizhülse wird drehend auf das sich konisch erweiternde Kopfteil aufgetrieben. Dabei erstellen die Schneiden im Bereich des Bohrlochtiefsten fräsend schabend eine Hinterschneidung. Zur Übertragung der Drehbewegung ist die Spreizhülse an ihrem rückwärtigen Hülsenrand mit zwei axialen Nuten versehen, die einander diametral gegenüberliegen. Die Nuten sind für den Eingriff eines korrespondierend geformten Setzwerkzeugs ausgebildet, welches, beispielsweise von einem Hammerbohrgerät drehend schlagend angetrieben, der Hülse zusätzlich zum axialen Vortrieb auch die erforderliche Drehbewegung vermittelt.

Die bekannten Spreizanker sind nach ihrer Verankerung in einem Bohrloch in der Regel nicht mehr demontierbar. Bei den bekannten Spreizankem, insbesondere bei selbsthinterschneidenden Hinterschnittsystemen, kann es vorkommen, dass der Anker nicht vollständig gesetzt werden kann. Trifft ein bekannter Hinterschnittanker beispielsweise auf ein Armierungseisen, so blockiert er in der Regel und ist dann nicht mehr vollständig aufspreizbar. Selbst wenn der Spreizanker nur geringfügig aufgespreizt ist, ist er von Hand nicht mehr aus dem Bohrloch entfernbar. Da der Spreizanker aber nicht vollständig aufgespreizt ist, kann der Befestigungspunkt nicht genützt werden. Beispielsweise kann eine Inspektion eines Befestigungspunktes erforderlich machen, den verankerten Spreizanker wieder zu demontieren. Mit den bekannten Spreizankern ist dies kaum, und falls überhaupt, dann nur mit einem sehr grossen Aufwand möglich. Es kann auch ein vollständiger Rückbau erwünscht sein. Das heisst, dass nach dem Abbau eines befestigten Anbauteils auch der ursprüngliche Befestigungspunkt wieder vollständig entfernt werden soll. Mit den Spreizankem des Stands der Technik ist dies jedoch gar nicht, oder nur mit übermässig grossen Aufwand möglich.

Aufgabe der vorliegenden Erfindung ist es daher, diesen Nachteilen der Spreizanker des Stands der Technik abzuhelfen. Es soll ein Spreizanker geschaffen werden, der bei Bedarf auch wieder relativ einfach demontierbar ist. Die Lösung soll einfach und kostengünstig herstellbar sein.

Die Lösung dieser Aufgaben besteht in einem Spreizanker, der die im kennzeichnenden Abschnitt des Patentanspruchs 1 angeführten Merkmale aufweist. Insbesondere wird durch die Erfindung ein Spreizanker geschaffen, der eine Ankerstange mit einem Kopfteil, dass sich zum freien Ende der Ankerstange erweitert, und eine Spreizhülse mit einem Spreizlappen aufweisenden Spreizbereich besitzt. Die Spreizhülse ist unter radialem Ausstellen der Spreizlappen auf das Kopfteil auftreibbar. An ihrem rückwärtigen Hülsenrand weist die Spreizhülse zwei axiale Nuten auf, die einander diametral gegenüberliegen. Wenigstens eine der Seitenwände jeder Nut ist mit einer Ausnehmung versehen. Die Ausnehmungen in den Nuten sind dabei an entgegengesetzten Seitenwänden vorgesehen.

Die axialen Nuten sind bei Bedarf in der gewohnten Art für die Übertragung einer Drehbewegung auf die Spreizhülse nutzbar. Die Ausnehmungen in den Seitenwänden der Nuten sind für den Eingriff von radial abragenden Zapfen eines Demontagewerkzeugs ausgebildet. Indem die Ausnehmungen in den Nuten an entgegengesetzten Seitenwänden angeordnet sind, ist das Demontagewerkzeug einfach axial in die Nuten einführbar und durch Verdrehen in die diametral gegenüberliegenden Ausnehmungen schwenkbar. Dadurch ist das Montagewerkzeug formschlüssig in den Ausnehmungen gehalten und kann nicht mehr aus den Nuten herausgezogen werden. Durch axialen Zug kann die Spreizhülse bei Bedarf gemeinsam mit dem Montagewerkzeug aus dem Bohrloch gezogen werden.

Um einem Demontagewerkzeug einen ausreichenden axialen Angriff zu bieten, erweist es sich von Vorteil, wenn die Erstreckung der Ausnehmungen in Umfangsrichtung etwa 20% bis etwa 100%, vorzugsweise etwa 40% bis etwa 70%, der Weite einer Nut beträgt. Dadurch wird verhindert, dass bei axialem Zug die in die Ausnehmungen eingreifenden Zapfen des Montagewerkzeugs abgleiten.

Damit die für eine Demontage manchmal erforderlichen, relativ hohen axialen Zugkräfte gefahrlos aufgewandt werden können, erweist es sich von Vorteil, wenn der über der Ausnehmung verbleibende Materialsteg eine axiale Stärke aufweist, die wenigstens etwa 20% der axialen Tiefe einer Nut beträgt. Bei den verbleibenden Materialstärken ist die Gefahr eines Materialbruchs unterbunden.

Die Ausnehmung kann eine beliebige Gestalt haben. Aus fertigungstechnischen Gründen besitzt die Ausnehmung die Form einer im wesentlichen teilkreisförmigen, vorzugsweise halbkreisförmigen, Auskehlung. Die Auskehlung ist sehr einfach und kostengünstig herstellbar, indem beispielsweise eine Querbohrung in der Hülse angebracht wird. Der Krümmungsradius der Auskehlung weist dabei etwa das 0,1-fache bis etwa das 0,5-fache, vorzugsweise das 0,2-fache bis 0,4-fache, der axialen Tiefe einer Nut auf.

Zur Erleichterung des Ansetzens eines Demontagewerkzeuges sind in einer vorteilhaften Ausführungsvariante der Erfindung in beiden Seitenwänden der Nuten Ausnehmungen vorgesehen.

Während das Vorsehen von mit Ausnehmungen versehenen Nuten Vorteile für die Demontierbarkeit verschiedener Arten von Spreizankern bietet, erweist sich die erfindungsgemässe Ausbildung insbesondere bei, vorzugsweise selbstschneidenden, Hinterschnittsystemen als sehr zweckmässig.

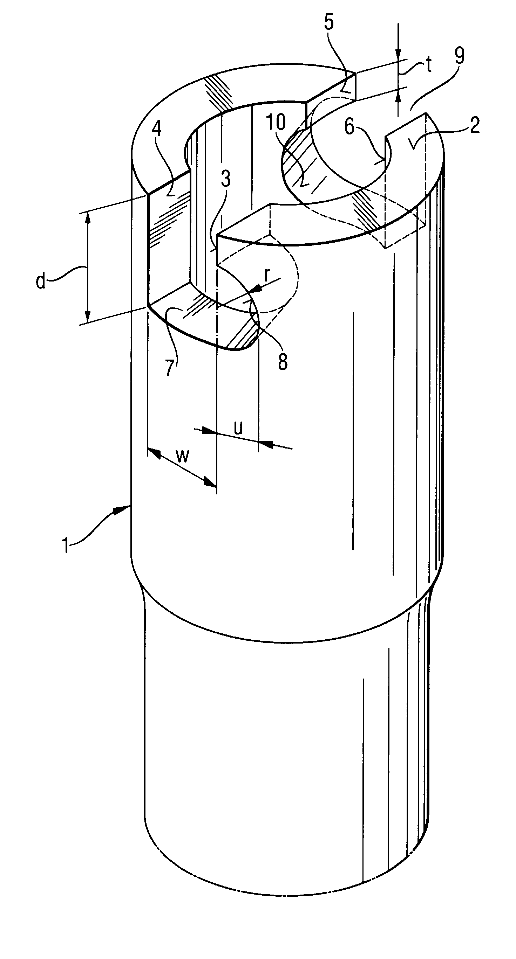

Im folgenden wird die Erfindung unter Bezugnahme auf ein schematisch dargestelltes Ausführungsbeispiel näher erläutert. In der einzigen Fig. ist dabei nur der rückwärtige Abschnitt der Spreizhülse eines erfindungsgemässen Spreizankers dargestellt. Die Spreizhülse trägt gesamthaft das Bezugszeichen 1. Von ihrem rückwärtigen Rand 2 erstrecken sich zwei Nuten 7, 9 in axialer Richtung, die einander auf einer Diagonalen gegenüberliegen. Die Nuten 7 bzw. 9 sind von Seitenwänden 3, 4 bzw. 5, 6 berandet. Soweit entspricht die Spreizhülse 1 den Spreizhülsen des Stands der Technik.

An jeweils einer der Seitenwände 3 bzw. 5 der Nuten 7 bzw. 9 sind Ausnehmungen 8 bzw. 10 ausgespart. Die Ausnehmungen 8, 10 in den Nuten 7, 9 sind dabei an einander entgegengesetzten Seitenwänden 3, 5 vorgesehen. Vorzugsweise weisen die Ausnehmungen 8, 10 die Form von teilkreisförmigen Auskehlungen auf. Auf diese Weise ausgebildet, sind die Auskehlungen 8, 10 einfach durch Querbohrungen in der Hülse 1 herstellbar. Der Krümmungsradius der Auskehlungen 8, 10 ist mit r bezeichnet und beträgt etwa das 0,1-fache bis etwa das 0,5-fache der axialen Tiefe d der Nuten 7, 9. In einer bevorzugten Ausführungsvariante der Erfindung beträgt der Krümmungsradius r der Auskehlungen 8, 10 etwa das 0,2-fache bis 0,4-fache der axialen Tiefe d der Nuten 7, 9. Die Erstreckung u der Auskehlungen 8, 10 in Umfangsrichtung beträgt etwa 20% bis etwa 100%, vorzugsweise etwa 40% bis etwa 70%, der mit w bezeichneten Weite der Nuten 7, 9. Für das Verhältnis der Weite w der Nuten 7, 9 zu ihrer Tiefe d gilt 0,2 ≤ w/d ≤ 1,5, vorzugsweise 0,5 ≤ w/d ≤ 1,2. Der über den Auskehlungen 8, 10 in den einander entgegengesetzten Seitenwänden 3, 5 verbleibende Materialsteg weist eine axiale Stärke t auf, die wenigstens etwa 20% der axialen Tiefe der Nuten 7, 9 beträgt.

Die erfindungsgemässe Anordung von seitlichen Ausnehmungen 8, 10 in den Nuten 7, 9 am rückwärtigen Rand der Spreizhülse 1 erweist sich insbesondere bei Hinterschnittankern von Vorteil, die drehend schlagend im Untergrund verankert werden. Dies ist vor allem bei selbstschneidenden Hinterschnittsystemen der Fall, bei denen während des Setzvorgangs an den Spreizlappen der Spreizhülse 1 angeordnete Schneiden fräsend schabend einen Hinterschneidung im Bohrloch erzeugen. Die Nuten 7, 9 sind für den Einsatz in Verbindung mit bekannten Setzwerkzeugen ausgebildet. Dabei greifen zwei von der Stirnseite abragende Klauen in die Nuten 7, 9 ein und übertragen die Drehbewegung des Setzwerkzeugs auf die Spreizhülse 1. Zur Demontage des erfindungsgemässen Spreizankers wird ein Demontagewerkzeug eingesetzt, das an seinem Vorderende radial abragende Zapfen aufweist. Die Zapfen werden in die einander diametral gegenüberliegenden Nuten 7, 9 eingeführt. Durch Verdrehen des Demontagewerkzeugs um seine Längsachse kommen die radial abragenden Zapfen in Eingriff mit den Ausnehmungen 8, 10 in den entgegengesetzten Längsseiten 3, 5 der Nuten 7, 9 ein. Durch axialen Zug am Demontagewerkzeug ist zunächst die Spreizhülse 1 aus dem Bohrloch herausziehbar. Danach kann die Ankerstange herausgezogen werden.

## Patentansprüche

1. Spreizanker umfassend eine Ankerstange mit einem Kopfteil, dass sich zum freien Ende der Ankerstange erweitert, und eine Spreizhülse (1) mit einem Spreizlappen aufweisenden Spreizbereich, die unter radialem Ausstellen der Spreizlappen auf das Kopfteil auftreibbar ist und an ihrem rückwärtigen Hülsenrand (2) zwei axiale Nuten (7, 9) aufweist, die einander diametral gegenüberliegen, **dadurch gekennzeichnet,** dass jeweils wenigstens eine der Seitenwände (3, 5) der Nuten (7, 9) mit einer Ausnehmung (8, 10) versehen ist, wobei die seitlichen Ausnehmungen (8, 10) in den Nuten (7, 9) an entgegengesetzten Seitenwänden (3, 5) vorgesehen sind.

2. Spreizanker nach Anspruch 1, dadurch gekennzeichnet, dass die Erstreckung (u) der seitlichen Ausnehmungen (8, 10) in Umfangsrichtung etwa 20% bis etwa 100%, vorzugsweise etwa 40% bis etwa 70% der Weite (w) einer Nut (7, 9) beträgt.

3. Spreizanker nach Anspruch 1 oder 2, dadurch gekennzeichnet, dass der über jeder seitlichen Ausnehmung (8, 10) verbleibende Materialsteg eine axiale Stärke (t) aufweist, die wenigstens etwa 20% der axialen Tiefe (d) einer Nut (7, 9) beträgt.

4. Spreizanker nach einem der vorangehenden Ansprüche, dadurch gekennzeichnet, dass die seitlichen Ausnehmungen (8, 10) von im wesentlichen teilkreisförmigen, vorzugsweise halbkreisförmigen, Auskehlungen gebildet sind, die einen Krümmungsradius (r) aufweisen, der etwa das 0,1-fache bis etwa das 0,5-fache, vorzugsweise das 0,2-fache bis 0,4-fache, der axialen Tiefe (d) einer Nut (7, 9) aufweist.

5. Spreizanker nach einem der vorangehenden Ansprüche, dadurch gekennzeichnet, dass in beiden Seitenwänden der Nuten (7, 9) Ausnehmungen vorgesehen sind.

6. Spreizanker nach einem der vorangehenden Ansprüche, dadurch gekennzeichnet, dass die Ankerstange und die Spreizhülse (1) Bestandteile eines, vorzugsweise selbstschneidenden, Hinterschnittsystems sind.
